# EUROPÄISCHE PATENTSCHRIFT

(11) **EP 3 368 199 B1**
(45) Veröffentlichungstag und Bekanntmachung des Hinweises auf die Patenterteilung: **21.12.2022**
(21) Anmeldenummer: 16801122.9
(22) Anmeldetag: 04.10.2016
(51) Int. Cl.: B01F 23/53, B01F 27/091, B01F 27/172, B01F 27/2323, B01F 27/9212, B01F 27/921, B01F 35/00, C08B 1/00, D21B 1/34

(54) **HOCHKONZENTRATIONSMISCHER ZUR HERSTELLUNG EINER ZELLULOSESUSPENSION MIT HOHER ZELLULOSEKONZENTRATION**
HIGH-CONCENTRATION MIXER FOR PRODUCING A CELLULOSE SUSPENSION HAVING A HIGH CELLULOSE CONCENTRATION
MÉLANGEUR HAUTE CONCENTRATION POUR LA FABRICATION D'UNE SUSPENSION DE CELLULOSE AVEC UNE CONCENTRATION EN CELLULOSE ÉLEVÉE

(30) Priorität: 30.10.2015 AT 509232015
(43) Veröffentlichungstag der Anmeldung: 05.09.2018
(73) Patentinhaber: Lenzing Aktiengesellschaft, 4860 Lenzing (AT)
(72) Erfinder: PILLICHSHAMMER, Johann, 4890 Frankenmarkt (AT); SCHREMPF, Christoph, 4701 Bad Schallerbach (AT); MAIER, Michael, 4890 Frankenmarkt (AT); MALZNER, Gerhard, 4860 Lenzing (AT)
(74) Vertreter: Röggla, Harald
(86) Internationale Anmeldenummer: PCT/AT2016/050259
(87) Internationale Veröffentlichungsnummer: WO 2017/070720

(56) Entgegenhaltungen:
- EP-A1- 0 350 754
- EP-A2- 0 117 716
- WO-A1-2015/132260
- DE-A1- 2 917 814
- DE-C1- 19 723 325
- DE-U1- 20 301 539
- US-A- 4 535 943
- US-A- 5 647 665

## Beschreibung

Die Erfindung betrifft einen Hochkonzentrationsmischer zur Herstellung einer homogenen Suspension von Zellulose in einer wässrigen Lösung eines tertiären Aminoxids mit einem ortsfesten Behälter und einem in einer Behälterachse angeordneten Rührer, der über einen im Bereich des Behälterbodens vorgesehenen Flansch mit einem Motor verbunden ist, der zum rotierenden Antreiben des Rührers zum Mischen der in dem Behälter vorgesehenen Suspension ausgebildet ist, wobei der Rührer Strömungsbrecher aufweist, die eine vertikale Abwärtsströmung der Suspension im Zentrum des Behälters und eine vertikale Aufwärtsströmung der Suspension im Bereich der Behälterwand bewirken.

Das Dokument EP 0 853 642 B1 offenbart ein Verfahren zur Herstellung einer Zellulosesuspension, bei dem ein Behälter mit Rührer zum Mischen und Lösen von Zellstoff in einer wässrigen Lösung verwendet werden. Als Lösungsmittel kommt in erster Linie N-Methylmorpholin-N-oxid (NMMO) zum Einsatz, in das Zellstoff gelegt und die zu der Zellulosesuspension vermischt werden. Gemäß der Lehre dieses Patents wird der Behälter, zum Erzielen einer besonders guten Mischung, in eine Richtung und der Rührer in die entgegen gesetzte Richtung rotierend angetrieben. Weiters ist offenbart den Rührer außerhalb der Behälterachse vorzusehen. Bei diesem bekannten Verfahren hat sich als Nachteil erwiesen, dass nur ein relativ geringer Zellulosegehalt in der Zellulosesuspension erhalten wird.

Das Dokument WO 2013/131113 A1 offenbart ebenfalls ein Verfahren zur Herstellung einer Zellulosesuspension, wobei in einem Hochkonzentrationsmischer eine Zellulosesuspension mit einem Zellulosegehalt von 4,0 bis 9,0 Gew.-% erhalten wird. Diese Zellulosesuspension wird auf eine Doppelsiebbandpresse aufgebracht und dort auf einen Zellulosegehalt von 9,0 bis 15,0 Gew.-% abgepresst. Bei diesem bekannten Verfahren hat sich als Nachteil erwiesen, dass die Doppelsiebbandpresse technisch komplex und folglich ausfallsanfällig und teuer im laufenden Betrieb ist.

Das Dokument DE 2917814 A1 offenbart einen Stofflöser zur Herstellung von Papierstoffsuspensionen. Bei dieser Vorrichtung hat sich als Nachteil erwiesen, dass nur ein relativ geringer Zellulosegehalt in der Zellulosesuspension erhalten wird.

Zudem offenbart das Dokument EP 0 117 716 A2 einen Mischer zur Herstellung von Zellulose-Suspensionen hoher Konzentrationen Weiters ist ein Hochkonzentrationsmischer aus dem Fachgebiet der Papierherstellung bekannt, in den wiederzuverwertendes Papier in eine wässrige Lösung zur Herstellung einer Zellulosesuspension eingebracht wird. Ein solcher Mischer wurde beispielsweise von der Firma Vaahto auf den Markt gebracht. Dieser Mischer weist einen in der Behälterachse angeordneten Rührer mit Wendeln und am Behälter symmetrisch am Umfang verteilten Strömungsbrechern auf, die eine vertikale Abwärtsströmung der Zellulosesuspension im Zentrum des Behälters und eine vertikale Aufwärtsströmung der Zellulosesuspension im Bereich der Behälterwand bewirken. Bei dem bekannten Mischer hat sich als Nachteil erwiesen, dass es bei höherem Zellulosegehalt in der Zellulosesuspension zu Ablagerungen zwischen Rotor und Behälterboden kam. Die Zellulosesuspension wurde in diesem Spalt nicht mehr umgewälzt und ausgetauscht, wodurch diese stark verpresst und beschädigt wurde. Die Folge waren Störungen im Prozess und Brandgefahr durch die sich entwickelnde Reibungswärme. Der gewünscht hohe Zellulosegehalt in der Zellulosesuspension war so nicht zu erreichen.

Der Erfindung liegt die Aufgabe zugrunde einen Hochkonzentrationsmischer zur Herstellung einer homogenen Suspension von Zellulose in einer wässrigen Lösung eines tertiären Aminoxids zu schaffen, mit dem eine Zellulosekonzentration von mehr als 9,0 Gew.-% im Hochkonzentrationsmischer erreicht werden kann.

Erfindungsgemäß wird diese Aufgabestellung dadurch gelöst, dass der Flansch zumindest eine an seinem Umfang vorgesehene Schaufel aufweist, die zum Abstreifen der Zellulosesuspension von dem Behälter und zum Unterstützen der vertikalen Aufwärtsströmung der Zellulosesuspension im Bereich der Behälterwand ausgebildet ist und, dass zwischen Behälterboden und Flansch ein Abstandshalter vorgesehen ist, der einen Spalt mit einer im Wesentlichen gleichbleibenden Breite zwischen Behälterboden und Flansch gewährleistet.

Die Erfindung basiert auf der Erkenntnis, dass von dem Rotor im Bereich des Behälterbodens ein erhöhter Druck in der Zellulosesuspension erzeugt wird, der zu der Strömung der Zellulosesuspension vom unteren zentralen Bereich des Behälters zum unteren peripheren Bereich des Behälters und von dort entlang der Behälterwand vertikal nach oben im Behälter beiträgt. Der erhöhte Druck im unteren Bereich des Behälter führt jedoch bei Mischern gemäß dem Stand der Technik bei Zellulosekonzentrationen von mehr als beispielsweise 9 Gew.-% dazu, dass die relativ zähflüssige Zellulosesuspension in den Spalt zwischen Flansch und Behälterboden gepresst wird und dort zu einer Beschädigung der Suspension führt, wodurch die vertikale Strömung entlang des Behälters zum Erliegen kommt. Durch das erfindungsgemäße Vorsehen von Schaufeln am Umfang des Flansches wird diesem Effekt entgegengewirkt, wodurch der Hochkonzentrationsmischer auch zur Herstellung von Zellulosesuspension in wässriger NMMO-Lösung mit einer Zellulosekonzentration von mehr als 9 Gew.-% und bis zu 15 Gew.-% und mehr geeignet ist.

Da der erhöhte Druck in der Zellulosesuspension im unteren zentralen Bereich des Behälters jeweils dort am höchsten ist, wo die Schraubwendeln des Rotors am Flansch enden, hat es sich als vorteilhaft erwiesen die Schaufeln am Flansch genau an diesen Positionen anzubringen. Hierdurch wird das Eindringen von relativ zähflüssiger Zellulosesuspension in den Spalt zwischen Flansch und Behälterboden besonders effektiv verhindert und die vorhandene Druckenergie in eine vertikale Strömung an der Behälterwand nach oben gewandelt.

Durch das Vorsehen eines Abstandshalters zwischen Flansch und Behälterboden wird der Abstand des Flansches zum Behälterboden von einem Spalt auf eine Breite erweitert, die auch bei zähflüssiger Zellulosesuspension noch vernachlässigbar kleine Reibungskräfte auf den rotierend angetriebenen Rührer bewirkt.

Gemäß einem anderen Ausführungsbeispiel, welches nicht Bestandteil der Erfindung ist, wird auf den Abstandshalter verzichtet, dafür aber ein Spülanschluss im Behälterboden unter dem Flansch angeordnet. Während dem Betrieb wird kontinuierlich wässrige Lösung, beispielsweise NMMO, oder Suspension aus dem gegenständlichen Behälter in den Spalt zwischen Flansch und Behälterboden gepumpt und so sichergestellt, dass sich keine zähflüssige Zellulosesuspension reibungserhöhend in dem Spalt ablagert. Die technische Maßnahme des Abstandshalters und des Spülanschlusses im Behälterboden kann natürlich auch kombiniert werden, um besonders hohe Zellulosekonzentrationen durchmischen zu können.

Das Vorsehen von Zacken oder Reißzähne an der freien Umfangskante der Schraubwendel hat sich zum Aufreißen der Zellstoffteile als vorteilhaft erwiesen. Hierdurch kann in kurzer Zeit eine besonders hohe Zellulosekonzentration erreicht werden.

Durch das Vorsehen eines Abstreifers an dem, dem Flansch gegenüberliegenden Ende des Rührers ist der Vorteil erhalten, dass sich Zellstoffteile, die sich während des Rührvorganges auf dem Rührer oberhalb des Flüssigkeitsspiegels der Zellulosesuspension ablagern könnten, wieder in die Zellulosesuspension einbebracht werden.

Ein Hilfsrührer mit eigenem Motor an der Behälterwand dient zum Unterstützen der vertikale Abwärtsströmung der Zellulosesuspension im Zentrum des Behälters und der vertikale Aufwärtsströmung der Zellulosesuspension im Bereich der Behälterwand und beschleunigt folglich den Mischvorgang zur Anreicherung einer hohen Zellulosekonzentration.

Weitere vorteilhafte Ausgestaltungen des erfindungsgemäßen Hochkonzentrationsmischers werden im Folgenden anhand der Figuren näher erläutert.
Figur 1 zeigt einen Hochkonzentrationsmischer in einer Schnittdarstellung von der Seite.
Figur 2 zeigt den Hochkonzentrationsmischer gemäß Figur 1 in einer Draufsicht.

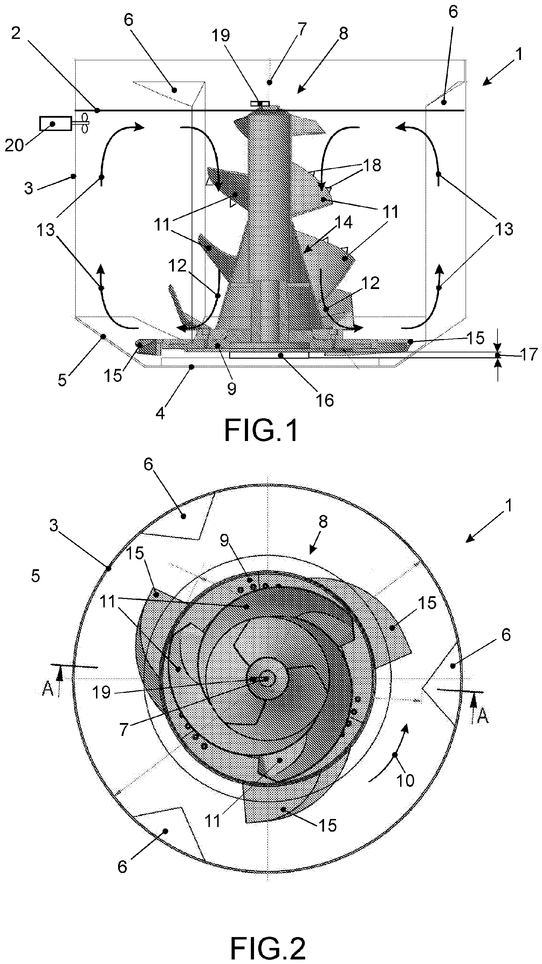

Figur 1 zeigt einen Hochkonzentrationsmischer beziehungsweise kurz Mischer 1 in einer Schnittdarstellung A-A von der Seite und Figur 2 zeigt den Mischer 1 in einer Draufsicht.

Der Mischer 1 eignet sich zur Mischung unterschiedlicher Suspensionen, ist aber insbesondere zur Herstellung einer Zellulosesuspension also einer homogenen Suspension 2 von Zellulose in einer wässrigen Lösung eines tertiären Aminoxids speziell N-Methylmorpholin-N-oxid (NMMO) geeignet. Der Flüssigkeitsspiegel der Suspension 2 in einem Behälter 3 des Mischers 1 ist in Figur 1 dargestellt. Der Behälter 3 ist zylinderförmig ausgebildet, wobei der Behälterboden 4 Abschrägungen 5 aufweist. Strömungsbrecher 6 an der Behälterwand dienen der besseren Durchmischung der Suspension 2.

Der Mischer 1 weist einen in einer Behälterachse 7 angeordneten Rührer 8 auf, der über einen im Bereich des Behälterbodens 4 vorgesehenen Flansch 9 mit einem in den Figuren nicht dargestellten Motor verbunden ist, der zum rotierenden Antreiben des Rührers 8 zum Mischen der in dem Behälter 3 vorgesehenen Suspension 2 ausgebildet ist. Der Motor treibt den Rührer 8 um seine Rotationsachse in eine Rotationsrichtung 10 an. Der Rührer 8 weist am Umfang der Achse des Rührers 8 drei rotationssymmetrisch angebrachte Schraubwendeln 11 auf, die eine vertikale Abwärtsströmung 12 der Suspension 2 im Zentrum des Behälters 3 und eine vertikale Aufwärtsströmung 13 der Suspension 2 im Bereich der Behälterwand bewirken. Die Achse des Rührers 8 weitet sich im unteren Bereich 14 kegelartig auf, wodurch der Druck in der nach unten strömenden Suspension 2 steigt und die beschriebene Strömung der Suspension 2 im Behälter 3 weiter verstärkt wird. Das Verhältnis des Durchmessers des Rührers 8 zu dem Durchmesser des Behälters 3 ist typischerweise 0,4 bis 0,8.

Der Flansch 9 des Mischers 1 weist nunmehr drei an seinem Umfang vorgesehene Schaufeln 15 auf, die zum Abstreifen der Suspension 2 von dem Behälter 3 und hierbei insbesondere zum Abstreifen der Suspension 2 von der Abschrägung 5 ausgebildet sind. Schwerere beziehungsweise zähflüssigere Anteile der Suspension 2 und hierbei insbesondere Teile der in dem Lösungsmittel NMMO aufzulösenden Zellulose werden hierbei in die vertikale Aufwärtsströmung 13 der Suspension 2 im Bereich der Behälterwand wieder eingebracht. Hierdurch wird vorteilhafterweise verhindert, dass diese zähflüssigeren oder gar festen Teile in den Spalt zwischen den Flansch 9 und den Behälterboden 4 gelangen und darin verbleiben, wo sie die Reibung zwischen dem sich drehenden Flansch 9 und dem fest stehenden Behälterboden 4 erhöhen würden.

Bei dem Mischer 1 ist weiters ein Abstandshalter 16 zwischen Flansch und Behälterboden 4 vorgesehen, wodurch der sonst nur sehr schmale Spalt auf eine Breite 17 erweitert wird, die auch bei zähflüssiger Zellulosesuspension noch vernachlässigbar kleine Reibungskräfte auf den rotierend angetriebenen Rührer 8 bewirkt. Die Breite 17 muss mindestens 20mm betragen und nimmt mit dem Durchmesser des Rührers 8 zu.

Gemäß einem anderen Ausführungsbeispiel, welches nicht Teil der Erfindung ist, könnte auf den Abstandshalter 16 verzichtet werden, dafür aber ein Spülanschluss im Behälterboden 4 unter dem Flansch 9 angeordnet werden. Während dem Betrieb würde bei diesem Ausführungsbeispiel kontinuierlich wässrige Lösung, beispielsweise NMMO, oder Suspension aus dem gegenständlichen Behälter in den Spalt zwischen Flansch 9 und Behälterboden 4 gepumpt werden um sicherzustellen, dass sich keine zähflüssige Zellulosesuspension reibungserhöhend in dem Spalt ablagert.. Die technische Maßnahme des Abstandshalters 16 und des Spülanschlusses im Behälterboden 4 könnte natürlich auch kombiniert werden. Der durch die im unteren Bereich 14 kegelartig aufgeweitete Achse des Rührers 8 erhöhte Druck in der Suspension 2 im unteren zentralen Bereich des Behälters 3 ist jeweils dort am höchsten, wo die Schraubwendeln 11 des Rotors am Flansch 9 enden. Aus diesem Grund hat es sich als vorteilhaft erwiesen die Schaufeln 5 am Flansch 9 genau an diesen Positionen anzubringen, wie dies in Figur 2 zu sehen ist. Hierdurch wird das Eindringen von relativ zähflüssiger Suspension 2 in den Spalt zwischen Flansch 9 und Behälterboden 4 besonders effektiv verhindert und die vorhandene Druckenergie in eine vertikale Strömung an der Behälterwand nach oben gewandelt.

Der Mischer 1 weist nunmehr weiters an der freien Umfangskante der Schraubwendel 11 Zacken 18 auf, um in der Suspension enthaltene Zellstoffteile aufzureißen. Die Zacken könnten auch durch Ausnehmungen der Umfangskante oder durch andere Formen gebildet sein. Hierdurch kann in kurzer Zeit eine besonders hohe Zellulosekonzentration erreicht werden.

Gemäß einem Anwendungsbeispiel wurde vorerst eine 8%igen Suspension 2 aus einem Fichtenzellstoff und einer 76%igen NMMO Lösung mit einem Rührer ohne Reißzähne am Rührer hergestellt. Die Suspensionsqualität war schlecht da Zellstoffblätter zusammen klappten, große Klumpen bildeten die sich nicht mehr auflösten und zusätzlich beim Entleeren den Auslass verstopften. Durch die Ausrüstung des Rührers 8 mit Reißzähnen 18 konnte die Klumpenbildung wirkungsvoll verhindert und das Einziehen der Zellstoffblätter in die Suspension 2 verbessert werden.

Der Rührer 8 des Mischer 1 weist nunmehr weiters an seinem dem Flansch 9 gegenüberliegendem Ende einen Abstreifer 19 auf, der zum Abstreifen von Zellstoffteilen der Suspension 2 ausgebildet ist. Diese Zellstoffteile sind beim Einbringen typischerweise 60 x 80cm oder 75 x 100cm groß und können auf dem Rührer 8 hängen bleiben. Es ist aber auch möglich, dass sich bereits teilweise aufgelöste beziehungsweise zerkleinerte Zellstoffteile auf dem knapp oberhalb des Flüssigkeitsspiegels liegenden Ende des Rührers 8 ablagern. Nur durch das Vorsehen des Abstreifers 19 ist sichergestellt, dass alle in den Behälter 3 eingebrachten Zellstoffteile auch in der Suspension 2 gelöst werden.

Der Mischer 1 weist weiters einen Hilfsrührer 20 mit eigenem Motor an der Behälterwand zum Unterstützen der vertikale Abwärtsströmung 12 der Suspension 2 im Zentrum des Behälters 3 und der vertikale Aufwärtsströmung 13 der Suspension 2 im Bereich der Behälterwand auf. Durch den Hilfsrührer 20 wird die Strömung noch verstärkt und die Durchmischung der Suspension 2 beschleunigt. Es wird aber ausdrücklich festgehalten, dass der Mischer auch ohne Hilfsmotor die erfindungsgemäße Aufgabe löst, eine Zellulosesuspension in wässriger NMMOLösung mit einer Zellulosekonzentration von mehr als 9 Gew.-% und bis zu 15 Gew.-% und mehr herzustellen.

Bei einem Anwendungsbeispiel des Mischers 1 wurde Zellulose in 60 x 80 cm großen Stücken ohne Vorzerkleinerung trocken oder bis zu 50% Feuchtigkeitsgehalt in die wässrige NMMO Lösung von 72% bis 80% als Mischungspartner eingebracht. Der Rührer 8 wurde mit 100 bis 500 Umdrehungen pro Minute angetrieben, wobei die zu wählende Umdrehungszahl von der Größe des Behälters 3 abhängt. Die Zellulose kann auch als größere Zellstoffblätter von 75 x 100 cm oder sogar noch größer in den Mischer 1 eingebracht werden, um eine homogene Suspension 2 von Zellulose in einer wässrigen Lösung eines tertiären Aminoxids zu erhalten.

Es kann erwähnt werden, dass zumindest eine der Schaufeln eine spezielle Ausformung aufweisen kann. Die Spitze dieser Schaufel ist in Rotationsrichtung nicht nach unten gebogen, während an der Unterseite ein Leitblech montiert ist, die die Suspension, die sich unter der Schaufel sammelt, gegen eine Auslassöffnung des Behälters drückt während der Rührer sich dreht. Das bewirkt eine weitest gehende Entleerung von sehr zäh fließender Suspension.

Der Abstand vom Ende einer Schaufel 15, in Rotationsrichtung 10 betrachtet, bis zum Anfang der nächsten Schaufel 15 muss groß genug gewählt werden, dass ein Austausch der Suspension 2 unter dem Flansch 9 begünstigt wird. Zumindest 30% des Umfanges sollte auf diese Weise freigestellt sein.

Weiters kann erwähnt werden, dass die Behälterwand beheizt werden kann. Gemäß einem weiteren Anwendungsbeispiel wurde eine 12,7%igen Suspension 2 aus einem Kurzfaserzellstoff und einer 78%igen NMMO Lösung bei einer Temperatur von 75°C hergestellt. Bei dieser Temperatur ist die Suspension deutlich fließfähiger und die Antriebsleistung am Rührer 8 deutlich geringer als mit 65°C Temperatur der Suspension 2. Die Suspension 2 erreichte bei 65°C bereits eine sehr hohe Steifigkeit.

Der Hochkonzentrationsmischer könnte sowohl diskontinuierlich als auch kontinuierlich betrieben werden.

Es kann erwähnt werden, dass der Rührer auch alternative Ausführungsvarianten mit einer oder mehreren Schraubwendeln aufweisen kann. Gemäß einer Ausführungsvariante verläuft die eine oder verlaufen mehrere Schraubwendeln nicht bis zum Flansch sondern enden weiter oben. Diese Schraubwendeln erzeugen nur eine vertikale Abwärtsströmung im Zentrum des Behälters während eine oder mehrere weitere Schraubwendeln direkt am Flansch eine horizontale Strömung vom Zentrum des Behälters zur Behälterwand erzeugen, wodurch die vertikal Aufwärtsströmung an der Behälterwand unterstütz wird.

## Patentansprüche

1. Hochkonzentrationsmischer (1) zur Herstellung einer homogenen Suspension (2) von Zellulose in einer wässrigen Lösung eines tertiären Aminoxids mit einem ortsfesten Behälter (3) und einem in einer Behälterachse (7) angeordneten Rührer (8), der über einen im Bereich des Behälterbodens (4) vorgesehenen Flansch (9) mit einem Motor verbunden ist, der zum rotierenden Antreiben des Rührers (8) zum Mischen der in dem Behälter (3) vorgesehenen Suspension (2) ausgebildet ist, wobei der Rührer (8) zumindest eine Schraubwendel (11) aufweist, die eine vertikale Abwärtsströmung (12) der Suspension (2) im Zentrum des Behälters (3) und eine vertikale Aufwärtsströmung (13) der Suspension (2) im Bereich der Behälterwand bewirkt, wobei der Flansch (9) zumindest eine an seinem Umfang vorgesehene Schaufel (15) aufweist, die zum Abstreifen der Suspension (2) von dem Behälter (3) und zum Unterstützen der vertikalen Aufwärtsströmung (13) der Suspension (2) im Bereich der Behälterwand ausgebildet ist und wobei zwischen Behälterboden (4) und Flansch (9) ein Abstandshalter (16) vorgesehen ist, der einen Spalt mit einer im Wesentlichen gleichbleibenden Breite (17) zwischen Behälterboden (4) und Flansch (9) gewährleistet.

2. Hochkonzentrationsmischer gemäß Anspruch 1, **dadurch gekennzeichnet, dass** im Behälterboden ein Spülanschluss vorgesehen ist über den mit einer Pumpe eine wässrige NMMO-Lösung oder Suspension aus dem Behälter entnommen und/oder in den Behälter eingebracht werden kann.

3. Hochkonzentrationsmischer (1) gemäß einem der vorherigen Ansprüche, bei dem die zumindest eine Schraubwendel (11) am Umfang der Achse des Rührers (8) angebracht ist und an dem Flansch (9) endet, **dadurch gekennzeichnet, dass** an der Position beziehungsweise dass an den Positionen an denen die eine oder mehreren Schraubwendeln (11) an dem Flansch (9) enden jeweils eine der Schaufeln (15) vorgesehen ist.

4. Hochkonzentrationsmischer (1) gemäß Anspruch 3, **dadurch gekennzeichnet, dass** die freie Umfangskante der Schraubwendel (11) Zacken oder Reißzähne (18) aufweist, um in der Suspension (2) enthaltene Zellstoffteile aufzureißen.

5. Hochkonzentrationsmischer (1) gemäß einem der vorherigen Ansprüche, **dadurch gekennzeichnet, dass** der Rührer (8) an seinem dem Flansch (9) gegenüberliegendem Ende einen Abstreifer (19) aufweist, der zum Abstreifen von Zellstoffteilen der Suspension (2) ausgebildet ist.

6. Hochkonzentrationsmischer (1) gemäß einem der vorherigen Ansprüche, **dadurch gekennzeichnet, dass** ein Hilfsrührer (20) mit eigenem Motor an der Behälterwand zum Unterstützen der vertikale Abwärtsströmung (12) der Suspension (2) im Zentrum des Behälters (3) und der vertikale Aufwärtsströmung (13) der Suspension (2) im Bereich der Behälterwand vorgesehen ist.

7. Verfahren zur Verwendung eines Hochkonzentrationsmischers (1) gemäß einem der Patentansprüche 1 bis 6, **dadurch gekennzeichnet, dass** Zellulose in etwa 60 x 80 cm bis zu etwa 75 x 100 cm großen Zellstoffstücken ohne Vorzerkleinerung trocken oder bis zu 50% Feuchtigkeitsgehalt in die wässrige NMMO Lösung von etwa 72% bis 80% als Mischungspartner zur Herstellung einer homogenen Suspension eingebracht wird.

## Claims

1. A high-concentration mixer (1) for producing a homogeneous suspension (2) of cellulose in an aqueous solution of a tertiary amine oxide, comprising a stationary container (3) and an agitator (8) arranged in a container axis (7), which agitator is connected to a motor via a flange (9) provided in the region of the container bottom (4), which motor is designed for rotationally driving the agitator (8) for mixing the suspension (2) provided in the container (3), wherein the agitator (8) has at least one helical coil (11) which brings about a vertical downward flow (12) of the suspension (2) in the centre of the container (3) and a vertical upward flow (13) of the suspension (2) in the region of the container wall, wherein the flange (9) comprises at least one blade (15) provided on its circumference, which is designed for wiping the suspension (2) from the container (3) and for supporting the vertical upward flow (13) of the suspension (2) in the region of the container wall, and wherein a spacer (16) is provided between the container bottom (4) and the flange (9), which ensures a gap of a substantially consistent width (17) between the container bottom (4) and the flange (9).

2. A high-concentration mixer according to claim 1, **characterized in that**, in the container bottom, a flush connection is provided via which an aqueous NMMO solution or a suspension can be withdrawn from the container and/or introduced into the container by means of a pump.

3. A high-concentration mixer (1) according to any of the preceding claims, wherein the at least one helical coil (11) is mounted on the circumference of the axis of the agitator (8) and ends on the flange (9), **characterized in that**, in each case, one of the blades (15) is provided at the position or, respectively, at the positions where the one or several helical coils (11) end on the flange (9).

4. A high-concentration mixer (1) according to claim 3, **characterized in that** the free peripheral edge of the helical coil (11) has prongs or ripper teeth (18) for tearing up pulp parts contained in the suspension (2).

5. A high-concentration mixer (1) according to any of the preceding claims, **characterized in that** the agitator (8) has a scraper (19) at its end opposite to the flange (9), which scraper is designed for wiping off pulp parts of the suspension (2).

6. A high-concentration mixer (1) according to any of the preceding claims, **characterized in that** an auxiliary agitator (20) with a separate motor is provided on the container wall for supporting the vertical downward flow (12) of the suspension (2) in the centre of the container (3) and the vertical upward flow (13) of the suspension (2) in the region of the container wall.

7. A method of using a high-concentration mixer (1) according to any of claims 1 to 6, **characterized in that** cellulose is introduced into the aqueous NMMO solution of about 72% to 80% as a mixing partner in pulp pieces of a size of about 60 x 80 cm to about 75 x 100 cm without pre-crushing in a dry state or with a moisture content of up to 50% for the preparation of a homogeneous suspension.

## Revendications

1. Mélangeur haute concentration (1) pour la fabrication d'une suspension homogène (2) de cellulose dans une solution aqueuse d'un aminoxyde tertiaire comprenant un récipient fixe (3) et un agitateur (8) disposé dans un axe de récipient (7) qui est relié par une bride (9) prévue dans la région du fond de récipient (4) avec un moteur qui est configuré pour entrainer en rotation l'agitateur (8) afin de mélanger la suspension (2) prévue dans le récipient (3), dans lequel l'agitateur (8) comporte au moins une spire hélicoïdale (11) qui provoque un flux descendant vertical (12) de la suspension (2) au centre du récipient (3) et un flux montant vertical (13) de la suspension (2) dans la région de la paroi du récipient, dans lequel la bride (9) présente au moins une pale (15) prévue au niveau de sa périphérie qui est configurée pour détacher la suspension (2) du récipient (3) et pour favoriser le flux montant vertical (13) de la suspension (2) dans la région de la paroi du récipient et dans lequel il est prévu entre le fond de récipient (4) et la bride (9) un écarteur (16) qui garantit un espace d'une largeur sensiblement constante entre le fond de récipient (4) et la bride (9).

2. Mélangeur haute concentration selon la revendication 1, **caractérisé en ce que** dans le fond de récipient est prévu un raccord de rinçage par lequel, au moyen d'une pompe, une suspension ou une solution de NMMO aqueuse peut être extraite du récipient et/ou introduite dans le récipient.

3. Mélangeur haute concentration selon une des revendications précédentes dans lequel l'au moins une spire hélicoïdale (11) est montée à la périphérie de l'axe de l'agitateur (8) et se termine au niveau de la bride (9), **caractérisé en ce qu'**à l'endroit ou aux endroits auxquels la ou les brides hélicoïdales (11) se terminent au niveau de la bride (9) est prévue une des pales (15).

4. Mélangeur haute concentration selon la revendication 3, **caractérisé en ce que** l'arête périphérique libre de la spire hélicoïdale (11) présente des dentelures ou des dents de broyage (18) pour broyer des particules de cellulose contenus dans la suspension (2).

5. Mélangeur haute concentration selon une des revendications précédentes, **caractérisé en ce que** l'agitateur (8) présente à son extrémité opposée à la bride (9) un racloir (19) qui est configuré pour enlever les particules de cellulose de la suspension (2).

6. Mélangeur haute concentration (1) selon une des revendications précédentes, **caractérisé en ce qu'**un agitateur auxiliaire (20) doté de son propre moteur est prévu sur la paroi du récipient pour favoriser le flux descendant vertical (12) de la suspension (2) au centre du récipient (3) et le flux montant vertical (13) de la suspension (12) dans la région de la paroi du récipient.

7. Procédé d'utilisation d'un mélangeur haute concentration (1) selon une des revendications 1 à 6, **caractérisé en ce que** de la cellulose est introduite sans déchiquetage préalable, sous la forme de pièces de cellulose mesurant d'environ 60 x 80 cm à environ 75 x 100 cm sèches ou présentant un taux d'humidité pouvant atteindre 50%, dans la solution de NMMO aqueuse d'environ 72% à 80% en guise de partenaire de mélange pour fabriquer une suspension homogène.
